# EUROPÄISCHE PATENTSCHRIFT

(11) **EP 1 637 411 B1**
(45) Veröffentlichungstag und Bekanntmachung des Hinweises auf die Patenterteilung: **12.12.2007**
(21) Anmeldenummer: 05019144.4
(22) Anmeldetag: 02.09.2005
(51) Int. Cl.: B60R 21/34

(54) **Anordnung einer Frontklappe an einem Fahrzeug**
Arrangement of a bonnet on a vehicle
Arrangement d'un capot de véhicule

(30) Priorität: 15.09.2004 DE 102004044736
(43) Veröffentlichungstag der Anmeldung: 22.03.2006
(73) Patentinhaber: Bayerische Motoren Werke Aktiengesellschaft, 80809 München (DE)
(72) Erfinder: Schmitt, Torsten, 81829 München (DE); Köhler, Gregor, 67161 Gönnheim (DE)

(56) Entgegenhaltungen:
- EP-A2- 1 104 728
- EP-A2- 1 199 429
- US-B1- 6 415 882

## Beschreibung

Die Erfindung betrifft eine Anordnung einer Frontklappe an einem Fahrzeug.

Um bei einer Kollision eines Fußgängers oder Radfahrers mit einem Kraftfahrzeug das Ausmaß von Verletzungen, insbesondere im Brust- und Kopfbereich, zu reduzieren, ist es allgemein bekannt, einen Mindestabstand zwischen einer Frontklappe und einer steifen Unterstruktur des Fahrzeugs (Motor, Federbeinaufnahmen, etc.) vorzusehen, sodass ein ausreichender Deformationsweg der Frontklappe zur Verfügung steht, um den Aufprall des Fußgängers oder Radfahrers auf ein verträgliches Maß zu verzögern. Kritisch bleibt allerdings der Bereich der Frontklappe nahe bei Scharniereinrichtungen, mit denen die Frontklappe an die Karosserie angelenkt ist, da die Frontklappe in diesem Bereich nicht ausreichend deformierbar ist.

Zur Vermeidung dieses kritischen Bereichs ist es aus der JP 2000-108842 A bekannt, zwischen den Scharniereinrichtungen und der Frontklappe und zwischen den Scharniereinrichtungen und der Karosserie jeweils ein energieabsorbierendes Element aus einem elastischen Material anzubringen

Aus der gattungsbildenden EP 1 199 429 A2 ist bereits eine Anordnung einer Frontklappe an einem Fahrzeug bekannt, die mit zumindest einer Scharniereinrichtung mit der Karosserie des Fahrzeugs verbunden ist. Die Scharniereinrichtung weist zur Befestigung zumindest einen Abschnitt auf, der sich in vertikaler Richtung erstreckt, wobei sich zumindest eine längliche Ausnehmung als Führungsbahn in dem Abschnitt befindet. Die Ausnehmung erstreckt sich zumindest auch in vertikaler Richtung.

Aufgabe der Erfindung ist es, eine Anordnung einer Frontklappe an einem Fahrzeug zu schaffen, die einen aufprallenden Fußgänger oder Radfahrer möglichst gut vor Verletzungen schützt.

Diese Aufgabe wird mit einer Anordnung einer Frontklappe an einem Fahrzeug mit den Merkmalen des Patentanspruchs 1 gelöst.

Erfindungsgemäß hat eine Scharniereinrichtung zur Anbindung einer Frontklappe an ein Fahrzeug zumindest einen Abschnitt, der eine Erstreckung in vertikaler Richtung (z) aufweist. In dem Abschnitt befindet sich zumindest eine längliche Ausnehmung als Führungsbahn, wobei die längliche Ausnehmung sich in Längsrichtung zumindest auch in vertikaler Richtung (z) erstreckt. Zumindest ein Bolzen ist mit seinem Schaft durch die längliche Ausnehmung gesteckt und an der Karosserie befestigt und verbindet so den Abschnitt und damit die Scharniereinrichtung kraft- und / oder formschlüssig mit der Karosserie. Bei einer Belastung der Scharniereinrichtung in vertikaler Richtung (z) mit einer Mindestkraft, wie sie beispielsweise bei einem Aufprall eines Fußgängers oder Radfahrers auf die Frontklappe entsteht, wird der Kraft- und / oder Formschluss zwischen dem Abschnitt und dem Bolzen zumindest teilweise aufgehoben, sodass sich der Bolzen in der länglichen Ausnehmung verlagern kann und so die Scharniereinrichtung geführt über die längliche Ausnehmung sich in vertikaler Richtung (z) absenken kann.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine Seitenansicht einer Frontklappe eines Fahrzeugs im Bereich einer Scharniereinrichtung, die über einen flächigen Abschnitt an eine Karosserie des Fahrzeugs angebunden ist,
- Fig. 2: eine Prinzipschnitt durch den flächigen Abschnitt zu einem Zeitpunkt t₁ vor einem Aufprall eines Fußgängers auf die Frontklappe,
- Fig. 3: eine Prinzipschnitt durch den flächigen Abschnitt zu einem Zeitpunkt t₂ während des Aufpralls eines Fußgängers auf die Frontklappe und
- Fig. 4: eine Prinzipschnitt durch den flächigen Abschnitt zu einem Zeitpunkt t₃ nach dem Aufprall eines Fußgängers auf die Frontklappe.

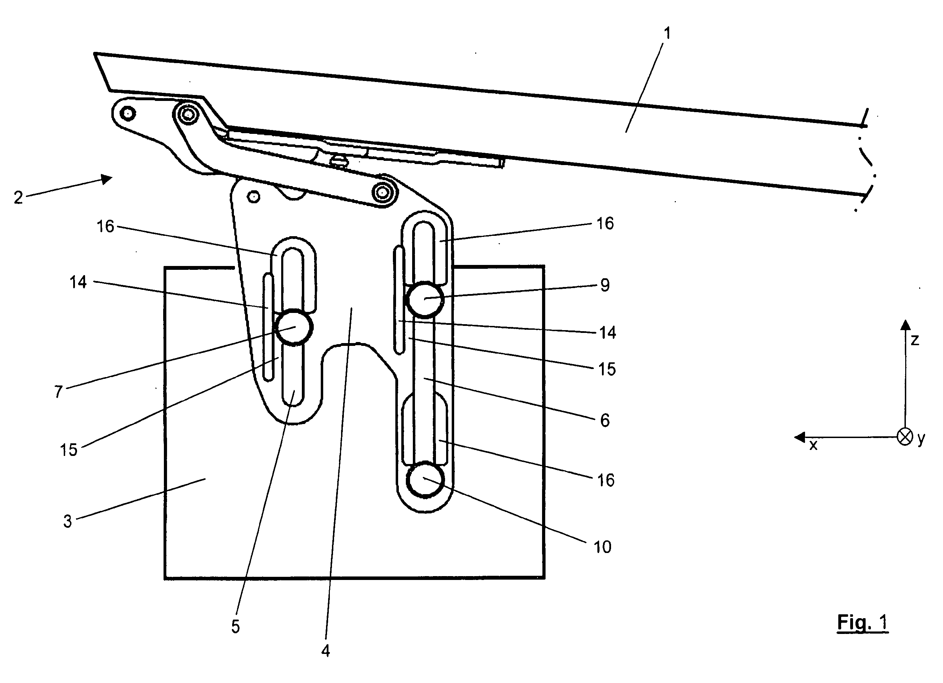

In Fig. 1 ist eine Frontklappe 1 eines Personenkraftwagens dargestellt, die beidseitig über je eine Scharniereinrichtung 2 mit der Karosserie 3 des Personenkraftwagens verbunden ist. Die Frontklappe 1 weist zu den darunter liegenden Aggregaten, wie dem Motor, den Federbeinaufnahmen, etc., einen Abstand von mindestens 6 cm auf. Wenn nun bei einem Unfall ein Fußgänger oder Radfahrer auf die Frontklappe 1 des Personenkraftwagens fällt, kann sich diese beim Aufprall des Fußgängers oder Radfahrers um diese 6 cm deformieren. Dadurch wird der Aufprall des Fußgängers oder Radfahrers abgemildert, sodass das Verletzungsrisiko abnimmt. Allerdings ist die Frontklappe 1 über die zwei Scharniereinrichtungen 2 an der Karosserie angelenkt. In den Bereichen dieser Scharniereinrichtungen 2 kann sich die Frontklappe nicht um diese 6 cm deformieren. Damit auch diese Bereiche trotzdem bei einem Aufprall eines Fußgängers oder Radfahrers nachgeben können, weisen die Scharniereinrichtungen 2 eine besondere Form auf und sind auf besondere Weise mit der Karosserie 3 verbunden:

Jede Scharniereinrichtung 2 weist als Scharnierunterteil einen flächigen Abschnitt 4 auf. Dieser flächige Abschnitt 4 erstreckt sich in einer Ebene in Fahrzeuglängsrichtung (x) und in vertikaler Richtung (z) senkrecht zur Fahrzeugquerrichtung (y). In dem flächigen Abschnitt 4 befinden sich zwei längliche Ausnehmungen 5 und 6, die sich in ihrer Längsrichtung in vertikaler Richtung (z) erstrecken. Ein Bolzen 7 mit einem Kopf ragt mit seinem Schaft 8 durch die linke längliche Ausnehmung 5 hindurch und ist dort mit der Karosserie 3 verbunden. Der Durchmesser des Schafts 8 des Bolzens 7 entspricht dabei annähernd der Breite der länglichen Ausnehmung 5, während der Kopf des Bolzens 7 einen größeren Durchmesser aufweist. Zwischen dem flächigen Abschnitt 4 und der Karosserie 3 ist eine Distanzscheibe untergelegt, durch die der Schaft 8 des Bolzens 7 hindurch gesteckt ist. Analog dazu ragen zwei Bolzen 9 und 10 mit ihren Schäften 11 und 12 jeweils durch die rechte längliche Ausnehmung 6 sowie jeweils eine Distanzscheibe hindurch und sind dort ebenfalls mit der Karosserie 3 verbunden.

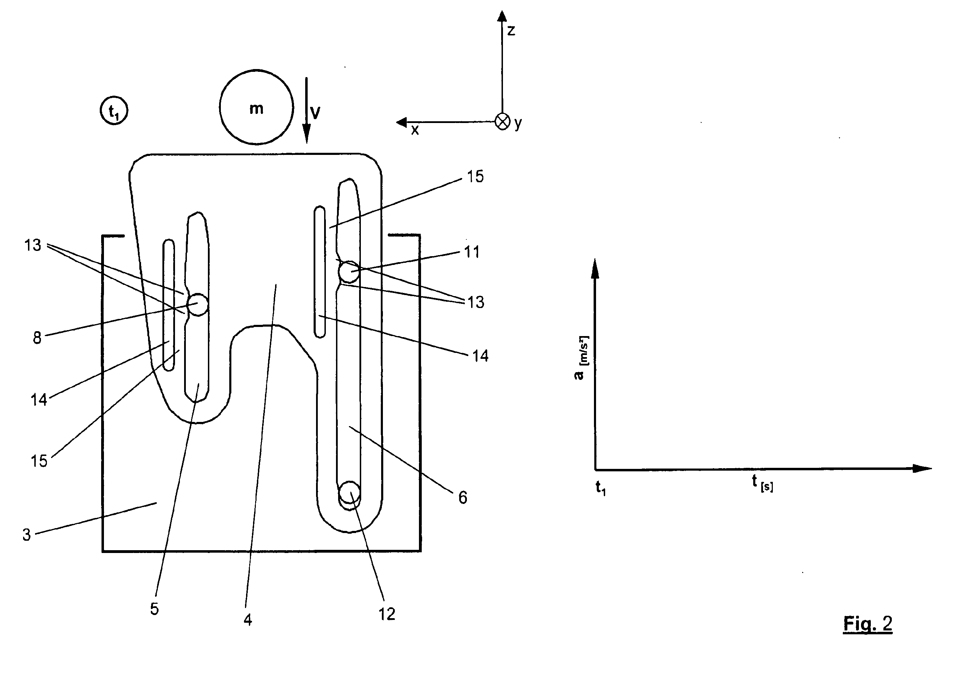

Die Bolzen 7 und 9 werden mit ihren Schäften 8 und 11 formschlüssig in vertikaler Richtung (z) in den länglichen Ausnehmungen 5 und 6 gehalten. Dazu weisen die länglichen Ausnehmungen 5 und 6 - wie in Fig. 2 dargestellt - unmittelbar unterhalb und unmittelbar oberhalb der Bolzen 7 und 9 jeweils eine Einschnürung 13 auf, die die länglichen Ausnehmungen 5 und 6 in ihrer Breite verengen. Der Bolzen 10 wird mit seinem Schaft 12 in der länglichen Ausnehmung 6 kraftschlüssig gehalten. Dazu ist die längliche Ausnehmung 6 im Bereich des Bolzens 10 etwas schmaler als in den übrigen Bereichen der länglichen Ausnehmung 6, sodass der Bolzen 10 kraftschlüssig in der länglichen Ausnehmung 6 klemmt. In dieser in Fig. 2 dargestellten Grundstellung ist die Scharniereinrichtung 2 also fest mit der Karosserie 3 verbunden. Die Frontklappe 1 lässt sich normal öffnen und schließen.

Parallel zu den länglichen Ausnehmungen 5 und 6 befindet sich im Bereich der Bolzen 7 und 9 jeweils ein Längsschlitz 14 in dem flächigen Abschnitt 4, sodass die linke Begrenzung der länglichen Ausnehmungen 5 und 6 in diesem Bereich jeweils nur durch einen relativ schmalen Steg 15 gebildet wird.

Wenn nun ein Fußgänger oder Radfahrer auf die Frontklappe 1 aufprallt, muss die Scharniereinrichtung 2 sich in vertikaler Richtung (z) verlagern können, damit auch bei einem Aufprall in diesem Bereich die Verletzungsgefahr möglichst gering ist. Der aufprallende Fußgänger ist in den Figuren 2 bis 4 als kugelförmige Masse m dargestellt, die mit einer Geschwindigkeit v auf die Frontklappe 1 aufprallt. In Fig. 2 ist die Grundstellung dargestellt, die zugleich der Stellung zum Zeitpunkt t₁ entspricht, wenn der Fußgänger beim Aufprall die Frontklappe 1 das erstemal berührt. Zu diesem Zeitpunkt t₁ hat der Fußgänger noch keine Verzögerung a erfahren, wie es auch dem Verzögerungsdiagramm in Fig. 2 entnommen werden kann.

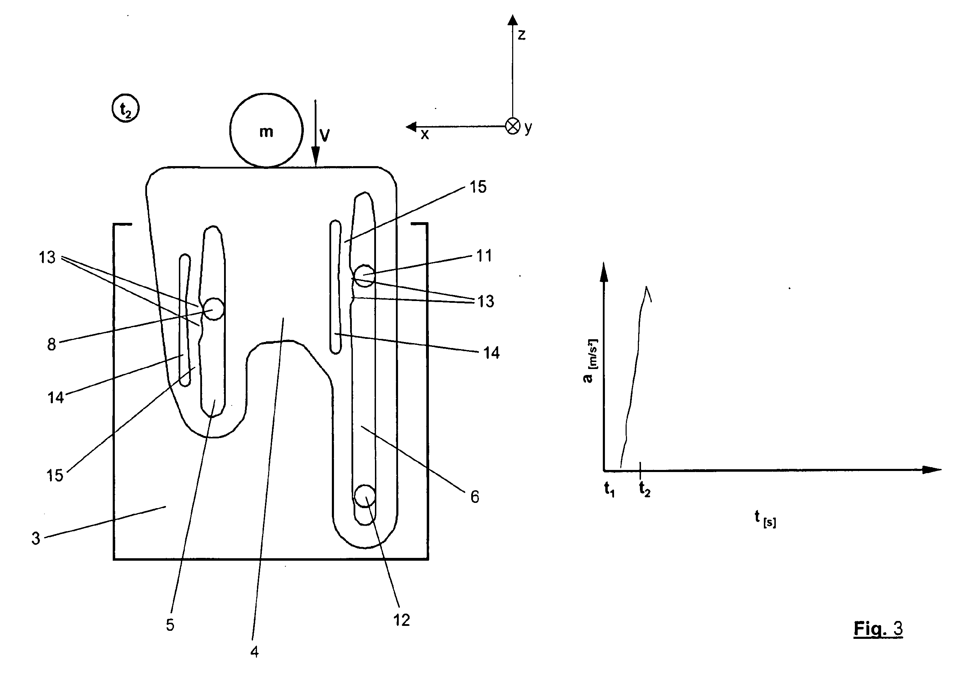

Bei dem nun folgenden eigentlichen Aufprall werden durch die Aufprallenergie des Fußgängers mit der Masse m die beiden Stege 15 - wie in Fig. 3 dargestellt - so deformiert, dass der Formschluss in vertikaler Richtung (z) zwischen den Schäften 8 und 11 der Bolzen 7 und 9 und den Einschnürungen 13 in den länglichen Ausnehmungen 5 und 6 aufgehoben wird. Auch der Kraftschluss zwischen dem Schaft 12 des Bolzens und der länglichen Ausnehmung 6 wird durch die Aufprallenergie des Fußgängers überwunden. Dadurch kann sich die Scharniereinrichtung 2 in vertikaler Richtung (z) absenken, und so den Aufprall des Fußgängers verzögern. Die Scharniereinrichtung 2 wird dabei durch die Bolzen 7, 9 und 10 in den länglichen Ausnehmungen 5 und 6 geführt. Im Verzögerungsdiagramm in Fig. 3 ist gut zu sehen, wie zunächst eine sehr hohe Verzögerung des Fußgängers entsteht, bis die erforderliche Deformation der Stege 15 abgeschlossen ist, und der Kraftschluss des Bolzens 10 überwunden ist. Der Beginn der Verzögerung erfolgt dabei nicht unmittelbar nach dem ersten Kontakt des Fußgängers mit der Frontklappe 1, sondern erst kurze Zeit später, da anfangs aufgrund des Spiels in der gesamten Mechanik die Frontklappe 1 ein kleines Stück nachgeben kann, ohne dass eine spürbare Verzögerung a für den Fußgänger entstehen würde.

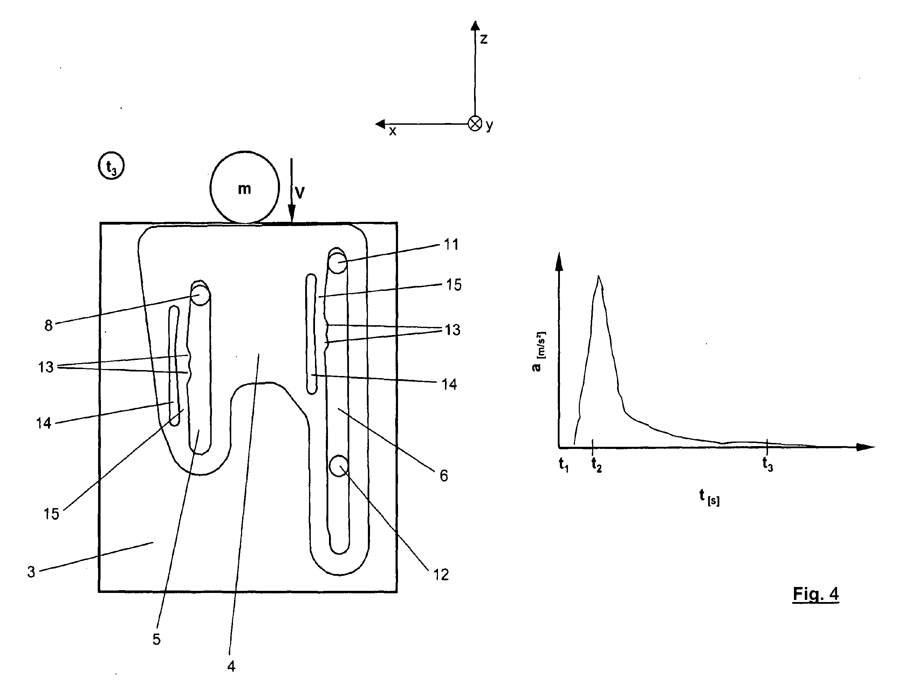

Nachdem nun zum Zeitpunkt t₂ die Deformation der Stege 15 abgeschlossen ist, und der Kraftschluss des Bolzens 10 überwunden ist, kann sich die Scharniereinrichtung 2 so weit absenken, bis die Bolzen 7 und 9 am oberen Ende der länglichen Ausnehmungen 5 und 6 formschlüssig anstoßen. Dies ist zum in Fig. 4 dargestellten Zeitpunkt t₃ der Fall. Die für diese Verlagerung der Scharniereinrichtung 2 in vertikaler Richtung (z) erforderlichen Kräfte sind wesentlich geringer, als die erforderlichen Kräfte zum Überwinden der Kraft- und Formschlüsse. Entsprechend fällt daher die Verzögerung a des Fußgängers m im Verzögerungsdiagramm unmittelbar nach dem Zeitpunkt t₂ wieder rapide ab.

Um sicherzustellen, dass die Verlagerung der Scharniereinrichtung 2 in vertikaler Richtung nicht durch eine undefinierbare Reibung zwischen den Köpfen der Bolzen 7, 9 und 10 und dem flächigen Bauteil 3 beeinflusst wird, weisen die Bereiche oberhalb der Bolzen 7, 9, 10 in der Grundstellung im flächigen Bauteil 3 jeweils eine eingefräste Vertiefung 16 auf. Dadurch wird vermieden, dass nach einer ersten kleinen Verlagerung der Scharniereinrichtung 2 es eine nennenswerte Reibung zwischen den Köpfen der Bolzen 7, 9 und 10 und dem flächigen Bauteil 3 geben kann, da sich dann die Köpfe der Bolzen 7, 9 und 10 in diesen Vertiefungen 16 befinden.

Um einen optimalen Schutz für den aufprallenden Fußgänger sicherstellen zu können, sollte die Verzögerung a des Fußgängers sich möglichst innerhalb definierter Grenzen bewegen. Dies setzt in diesem konkreten Fall voraus, dass die erforderlichen Kräfte zur Deformation der Stege 15 bzw. zum Überwinden des Kraftschlusses möglichst genau bestimmbar sind. Die erforderlichen Kräfte zur Deformation der Stege 15 lassen sich gut festlegen durch die Form und Größe der Einschnürungen 13, durch die Breite des Steges 15 und durch das Material, aus dem der flächige Abschnitt 3 und damit der Steg 15 besteht. Die erforderliche Kraft zum Überwinden des Kraftschlusses ist durch die Dimensionierung des Bolzens 10 und der Breite der länglichen Ausnehmung 6 im Bereich des Bolzens 10 in der Grundstellung genau einstellbar. So lässt sich die gewünschte Mindestkraft durch eine entsprechende Gestaltung und Dimensionierung der Bauteile genau festlegen. Diese Mindestkraft verhindert zum einen eine ungewollte Verlagerung der Scharniereinrichtung (2) in vertikaler Richtung (z) bei unerheblichen Stößen auf die Frontklappe (1), andererseits stellt es eine ausreichende Verzögerung sicher, wenn ein Fußgänger mit sehr viel Wucht auf der Frontklappe 1 aufprallt. So kann der Aufprall eines Fußgängers auf biomechanisch verträgliche Weise abgebremst werden, sodass die Verletzungsgefahr für den Fußgänger dabei abnimmt.

## Patentansprüche

1. Anordnung einer Frontklappe (1) an einem Fahrzeug, die mit zumindest einer Scharniereinrichtung (2) mit der Karosserie (3) des Fahrzeugs verbunden ist, wobei die Scharniereinrichtung (2) zur Befestigung an der Karosserie (3) zumindest einen Abschnitt (4) aufweist, der eine Erstreckung in vertikaler Richtung (z) aufweist, wobei sich zumindest eine längliche Ausnehmung (5, 6) als Führungsbahn in dem Abschnitt (4) befindet, und die längliche Ausnehmung (5, 6) sich in Längsrichtung zumindest auch in vertikaler Richtung (z) erstreckt, wobei zumindest ein Bolzen (7, 9, 10) mit seinem Schaft (8, 11, 12) durch die längliche Ausnehmung (5, 6) gesteckt ist, **dadurch gekennzeichnet, dass** der Bolzen (7, 9, 10) an der Karosserie (3) befestigt ist, und so den Abschnitt (4) und damit die Scharniereinrichtung (2) kraft- und / oder formschlüssig mit der Karosserie (3) verbindet, wobei bei einer Belastung der Scharniereinrichtung (2) in vertikaler Richtung (z) mit einer Mindestkraft, wie sie beispielsweise bei einem Aufprall eines Fußgängers oder Radfahrers auf die Frontklappe entsteht, der Kraft- und / oder Formschluss zwischen dem Abschnitt (4) und dem Bolzen (7, 9, 10) zumindest teilweise aufgehoben wird, sodass sich der Bolzen (7, 9 ,10) in der länglichen Ausnehmung (5, 6) verlagern kann und so die Scharniereinrichtung (2) geführt über die längliche Ausnehmung (5, 6) sich in vertikaler Richtung (z) absenken kann.

2. Anordnung nach Anspruch 1, **dadurch gekennzeichnet, dass** zur Erzeugung des Kraftschlusses die längliche Ausnehmung (6) im Bereich des Bolzens (10) etwas schmaler als in den übrigen Bereichen ist, sodass der Bolzen (10) kraftschlüssig in der länglichen Ausnehmung (6) klemmt.

3. Anordnung nach Anspruch 2, **dadurch gekennzeichnet, dass** nach dem Überwinden der Klemmkräfte der Bolzen (10) beim Absenken der Scharniereinrichtung (2) sich bereits nach einer kurzen Verlagerung der Scharniereinrichtung (2) in vertikaler Richtung (z) im übrigen Bereich der länglichen Ausnehmung (6) befindet und die Scharniereinrichtung (2) relativ zur Karosserie (3) führt.

4. Anordnung nach Anspruch 1, **dadurch gekennzeichnet, dass** zur Erzeugung des Formschlusses die längliche Ausnehmung (5, 6) auf zumindest einer Seite des Bolzens (7, 9) eine Einschnürung (13) aufweist, die die längliche Ausnehmung (5, 6) in der Breite verengt.

5. Anordnung nach Anspruch 4, **dadurch gekennzeichnet, dass** zum Überwinden des Formschlusses die seitliche Begrenzung (15) der länglichen Ausnehmung (5, 6) zumindest im Bereich einer Einschnürung (13) durch die Mindestkraft so deformiert werden muss, dass die längliche Ausnehmung (5, 6) in ihrer Breite aufgeweitet wird.

6. Anordnung nach Anspruch 5, **dadurch gekennzeichnet, dass** die seitliche Begrenzung (15) der länglichen Ausnehmung (5, 6) zumindest im Bereich der Einschnürung (13) relativ schmal gehalten ist, um eine definierte Deformation sicherzustellen.

7. Anordnung nach einem der Ansprüche 4 bis 6, **dadurch gekennzeichnet, dass** nach dem Überwinden des Formschlusses der Bolzen (7, 9) beim Absenken der Scharniereinrichtung (2) diese relativ zur Karosserie (3) führt.

## Claims

1. An arrangement of a bonnet (1) on a motor vehicle and connected to the vehicle body (3) by at least one hinge arrangement (2), wherein the hinge arrangement (2), for the purpose of fastening to the body (3), has at least one portion (4) which extends in the vertical direction (z), wherein at least one elongate recess (5, 6) forms a guide track in the portion (4) and the elongate recess (5, 6) extends in the longitudinal direction and at least in the vertical direction (z) also, wherein the shank (8, 11, 12) of at least one bolt (7, 9, 10) is inserted through the elongate recess (5, 6), **characterised in that** the bolt (7, 9, 10) is fixed to the body (3) so as to connect the portion (4) and consequently the hinge device (2) positively and/or non-positively to the body (3), wherein if the hinge device (2) is subjected to a load in the vertical direction (z) at a minimum force, e.g. after an impact between a pedestrian or cyclist and the bonnet, the positive and/or non-positive engagement between the portion (4) and the bolt (7, 9, 10) is at least partly broken, so that the bolt (7, 9, 10) can move in the elongate recess (5, 6) and so that the hinge device (2), guided by the elongate recess (5, 6), can sink in the vertical direction (z).

2. An arrangement according to claim 1, **characterised in that** in order to obtain the non-positive engagement the elongate recess (6) is slightly narrower in the region of the bolt (10) than at other places, so that the bolt (10) is non-positively clamped in the elongate recess (6).

3. An arrangement according to claim 2, **characterised in that** after the clamping forces of the bolt (10) have been overcome and the hinge device (10) is moving downwards, the bolt (10), after a short displacement of the hinge device (2) in the vertical direction (z), is already in the remaining region of the elongate recess (6) and guides the hinge device (2) relative to the body (3).

4. An arrangement according to claim 1, **characterised in that** in order to obtain the positive engagement the elongate recess (5, 6), on at least one side of the bolt (7, 9), has a constriction (13) which reduces the width of the elongate recess (5, 6).

5. An arrangement according to claim 4, **characterised in that** in order to break the positive engagement, the lateral boundary (15) of the elongate recess (5, 6), at least in the region of a constriction (13), has to be sufficiently deformed by the minimum force to widen the elongate recess (5, 6).

6. An arrangement according to claim 5, **characterised in that** the lateral boundary (15) of the elongate recess (5, 6), at least in the region of the constriction (13), is kept relatively narrow to ensure defined deformation.

7. An arrangement according to any of claims 4 to 6, **characterised in that** after the positive engagement has been overcome and the hinge device (2) is moving downwards, the bolt (7, 9) guides the device (2) relative to the body (3).

## Revendications

1. Montage de capot (1) sur un véhicule, le capot étant relié à la carrosserie (3) du véhicule par au moins une charnière (2),
la charnière (2) ayant au moins un segment (4) pour la fixation à la carrosserie (3), ce segment s'étendant dans la direction verticale Z,
le segment (4) comporte au moins une cavité allongée (5, 6) comme chemin de guidage et cette cavité allongée (5, 6) a sa direction longitudinale s'étendant au moins dans la direction verticale Z,
au moins un boulon (7, 9, 10) dont le corps (8, 11, 12) traverse la cavité allongée (5, 6),
**caractérisé en ce que**
le boulon (7, 9, 10) est fixé à la carrosserie (3) et relie ainsi le segment (4) et la charnière (2) à la carrosserie (3) par une liaison par la force et/ ou la forme, et
en cas de sollicitation de la charnière (2) dans la direction verticale Z par une force minimale telle que par exemple la collision avec un piéton ou un cycliste sur le capot, la liaison par la force et/ ou la forme entre le segment (4) et le boulon (7, 9, 10) est neutralisée au moins en partie de sorte que le boulon (7, 9, 10) peut se déplacer dans l'ouverture longitudinale (5, 6) et la charnière (2) peut s'abaisser dans la direction verticale Z en étant guidée par l'ouverture longitudinale (5, 6).

2. Montage de capot selon la revendication 1,
**caractérisé en ce que**
l'ouverture longitudinale (6) est sensiblement plus étroite dans la zone du boulon (10) que dans les autres parties pour créer une liaison par la force, de sorte que le boulon (10) est pincé dans la découpe longitudinale (6) par une liaison par la force.

3. Montage de capot selon la revendication 2,
**caractérisé en ce qu'**
après avoir vaincu les forces de serrage du boulon (10) lors de la descente de là charnière (2), déjà après un court déplacement de la charnière (2) dans la direction verticale Z, elle se trouve dans la partie restante de l'ouverture longitudinale (6) et la charnière (2) est guidée par rapport à la carrosserie (3).

4. Montage de capot selon la revendication 1,
**caractérisé en ce que**
pour générer la liaison par la forme, l'ouverture longitudinale (5, 6) comporte au moins d'un côté du boulon (7, 9) une partie rétrécie (13) qui diminue la largeur de l'ouverture longitudinale (5, 6).

5. Montage de capot selon la revendication 4,
**caractérisé en ce que**
pour vaincre la liaison par la forme, la limite latérale (15) de l'ouverture longitudinale (5, 6), au moins au niveau d'une partie rétrécie (13), doit être déformée par la force minimale pour élargir l'ouverture longitudinale (5, 6).

6. Montage de capot selon la revendication 5,
**caractérisé en ce que**
la limite latérale (15) de l'ouverture longitudinale (5, 6) est relativement étroite au moins au niveau de la partie rétrécie (13) pour garantir une déformation définie.

7. Montage de capot selon l'une des revendications 4 à 6,
**caractérisé en ce qu'**
après avoir vaincu la liaison par la forme, le boulon (7, 9) guide la charnière (2) par rapport à la carrosserie (3) dans le mouvement de descente.
